# EUROPÄISCHE PATENTSCHRIFT

(11) **EP 2 930 293 B1**
(45) Veröffentlichungstag und Bekanntmachung des Hinweises auf die Patenterteilung: **05.12.2018**
(21) Anmeldenummer: 15000636.9
(22) Anmeldetag: 05.03.2015
(51) Int. Cl.: E05B 85/10, B60R 11/04

(54) **KRAFTFAHRZEUGTÜRGRIFFEINHEIT MIT KAMERA**
MOTOR VEHICLE DOOR HANDLE UNIT WITH CAMERA
UNITÉ DE POIGNÉE DE PORTE DE VÉHICULE AUTOMOBILE DOTÉE D'UNE CAMÉRA

(30) Priorität: 09.04.2014 DE 102014005171; 29.10.2014 DE 102014015914
(43) Veröffentlichungstag der Anmeldung: 14.10.2015
(73) Patentinhaber: Huf Hülsbeck & Fürst GmbH & Co. KG, 42551 Velbert (DE)
(72) Erfinder: Bartels, Markus, 45472 Mülheim (DE); Müller, Dirk, 45359 Essen (DE); Mönig, Stefan, 58332 Schwelm (DE); Dieker, Coen, 40882 Ratingen (DE)
(74) Vertreter: Patentanwaltskanzlei Methling

(56) Entgegenhaltungen:
- EP-A1- 2 465 727
- EP-A2- 2 525 029
- DE-A1-102005 003 786
- DE-A1-102007 025 147
- DE-A1-102008 008 656
- US-A1- 2002 003 571
- US-A1- 2003 063 037

## Beschreibung

Die Erfindung betrifft eine Kraftfahrzeugtürgriffeinheit mit einer Handhabe zur Türschloss- und/oder Türbetätigung eines Kraftfahrzeuges.

Derartige Kraftfahrzeugtürgriffeinheiten zur Türschloss- und Türbetätigung eines Kraftfahrzeuges sind bekannt. Ferner ist es bekannt, am Heck eines Kraftfahrzeuges eine Rückfahrkamera anzuordnen.

Nachteilig dabei ist der sehr eingeschränkte Blickwinkel einer solchen Kamera, mit dem lediglich ein enger Bereich hinter dem Kraftfahrzeug erfasst werden kann, nicht jedoch der Bereich seitlich neben dem Fahrzeug.

Aus Dokument EP 2 465 727 A1 ist eine Kameravorrichtung für ein Kraftfahrzeug bekannt, für die Überwachung zumindest eines neben dem Fahrzeug umliegenden Bereichs, umfassend zumindest eine Kamera, die Echtzeitbilder von dem zu überwachenden Bereich einfängt, wobei die zumindest eine Kamera in zumindest einem Fahrzeuggriff des Autos angeordnet ist.

Aus der EP 2 525 029 A2 ist eine Betätigungsvorrichtung für ein bewegliches Teile eines Kraftfahrzeuges bekannt, wobei ein Träger, mittels eines Antriebs zwischen eingeklapptem und ausgeklapptem Zustand bewegbar ist und wobei am Träger eine Kamera zu Bilderfassung des Außenbereichs angeordnet ist. Der Antrieb weist dabei zumindest ein Kraftaufnahmeelement auf, sodass eine von außen wirkende Kraft aufnehmbar ist und der Träger in seiner ausgeklappten Position als Betätigungselement des beweglichen Teils dienen kann.
Aus Dokument DE 10 2005 003 786 A1 ist bildgebendes Umfelderkennungssystem eines Kraftfahrzeuges mit wenigstens einem auf der Kraftfahrzeugaußenseite angebrachtem Sensor und einem im Blickfeld des Fahrers angebrachtem Bildschirm bekannt, wobei der Sensor in oder an einem Kraftfahrzeugkarosserieteil so angeordnet ist, dass ein Seitenspiegel im Sichtfeld des Sensors liegt.
Die Aufgabe der Erfindung ist es diese Nachteile zu überwinden und eine Kraftfahrzeugtürgriffeinheit der eingangs genannten Art derart weiter zu bilden, dass diese eine erweiterte Funktionalität aufweist
Diese Aufgabe wird erfindungsgemäß durch eine Kraftfahrzeugtürgriffeinheit gemäß Anspruch 1 gelöst. Vorteilhafte Weiterbildungen der Erfindung sind in den Unteransprüchen angegeben

Ein besonderer Vorteil der erfindungsgemäße Kraftfahrzeugtürgriffeinheit besteht darin, dass mittels einer solchen Kraftfahrzeugtürgriffeinheit ein Außenspiegel eines Kraftfahrzeuges ersetzt werden kann.

Die erfindingsgemäße Kraftfahrzeugtürgriffeinheit mit einer Handhabe zur Türschloss- und/oder Türbetätigung eines Kraftfahrzeuges weist zumindest eine Kamera auf, mittels derer ein Bereich neben und/oder hinter dem Fahrzeug optisch erfassen werden kann, wobei die Kamera derart positioniert oder derart verfahrbar und positionierbar ist, dass die Kamera seitlich an dem Kraftfahrzeug nach hinten gerichtet ist.

Erfindungsgemäß ist diese innerhalb der Kraftfahrzeugtürgriffeinheit zwischen einer Ruheposition und mehreren Betriebspositionen verfahrbar angeordnet. Die Kamera ist dabei derart positioniert oder aber innerhalb der Kraftfahrzeugtürgriffeinheit verfahrbar angeordnet und derart positionierbar, dass diese gegen die Hauptfahrtrichtung des Kraftfahrzeuges nach hinten blickt, so dass der mittels der Kamera erfasste Bereich der Blickrichtung und insbesondere oder zumindest dem Blickwinkel entspricht, der mittels eines Rückspiegels vom Fahrer aus eingesehen werden kann. Dementsprechend kann mittels einer erfindungsgemäßen Kraftfahrzeugtürgriffeinheit in Verbindung mit einer entsprechenden Wiedergabeeinrichtung wie einen Monitor im Blickfeld des Fahrers ein Rückspiegel eines Kraftfahrzeuges ersetzt werden. Die Blickrichtung der Kamera ist dementsprechend seitlich entlang der Fahrzeugflanke zum Heck des Fahrzeugs hin gerichtet. Die Richtungsangabe nach hinten bezieht sich dabei auf die Orientierung des Kraftfahrzeuges bei dem die Front des Kraftfahrzeuges vorne und das Heck des Kraftfahrzeuges hinten angeordnet ist.
Ferner kann die Kamera derart angeordnet oder positionierbar sein, dass mittels der Kamera seitlich neben dem Fahrzeug ein nach unten in Richtung auf eine Bordsteinkante gerichteter Blickwinkel optisch erfasst wird und/oder dass mittels der Kamera durch eine Blickrichtung zur Seite neben dem Fahrzeug befindliche Hindernisse erkannt werden können. Hierzu kann die Kamera entsprechend positionierbar angeordnet sein, wobei der Begriff des Positionierens in diesem Sinne auch ein Verschwenken der Kamera um eine oder mehrere Achsen gegenüber der Kraftfahrzeugtürgriffeinheit umfasst. Es können auch eine oder mehrere weitere Kamera/s in die Kraftfahrzeugtürgriffeinheit integriert sein, um verschiedene Blickrichtungen optisch erfassen zu können, wobei eine oder mehrere Kameras verfahrbar und positionierbar sein können.

Dabei kann die Kraftfahrzeugtürgriffeinheit ein Griffgehäuse aufweisen und die Handhabe in dem Griffgehäuse angeordnet sein. Insbesondere kann ein solches Griffgehäuse als gesondertes Bauteil ausgebildet oder durch ein Karosserieteil des Kraftfahrzeuges gebildet sein.

Ferner betrifft die Erfindung somit ein System aus einer derartigen Kraftfahrzeugtürgriffeinheit zur Türschloss- und/oder Türbetätigung eines Kraftfahrzeuges mit einer darin integrierten Kamera sowie einer Bildwiedergabeeinrichtung, die innerhalb des Kraftfahrzeuges im Sichtbereich eines Fahrzeugführers, insbesondere im Bereich eines Armaturenträgers im Innenraum des Kraftfahrzeuges, angeordnet ist. Dabei werden auf der Bildwiedergabeeinrichtung die mittels der Kamera erfassten Bilder in Echtzeit angezeigt. Ein solches System ist somit geeignet, einen herkömmlichen Seitenspiegel eines Kraftfahrzeuges zu ersetzen. Bei der Bildwiedergabeeinrichtung kann es sich um einen Monitor handeln, auf welchem die mittels der Kamera erfassten Bilder angezeigt werden. Ferner können die mittels der Kamera erfassten Bilder mittels einer hierfür vorgesehenen Auswerteeinheit elektronisch bearbeitet sein, beispielsweise einen verstärkten Kontrast und/oder eine Restlichtverstärkung oder dergleichen aufweisen. Dementsprechend kann eine Auswerteeinheit vorgesehen sein. Alternativ oder kumulativ kann die Bildwiedergabeeinrichtung Piktogramme zur Anzeige bringen, um den Fahrer des Kraftfahrzeuges im Sinne eines Assistenzsystems zu unterstützen.

Die Kamera kann dabei in der Handhabe der Kraftfahrzeugtürgriffeinheit angeordnet sein. Alternativ oder kumulativ kann die Kamera in einem Zylinderturm der Kraftfahrzeugtürgriffeinheit angeordnet sein. Dabei kann eine Kamera alternativ oder kumulativ zu einem Schließzylinder innerhalb eines Zylinderturms der Kraftfahrzeugtürgriffeinheit angeordnet sein.

Wie erläutert kann durch eine derartige Kraftfahrzeugtürgriffeinheit ein Außenspiegel eines Kraftfahrzeuges ersetzt werden, indem das mittels der Kamera erfasste Bild unmittelbar auf einer Bildwiedergabeeinrichtung im Blickfeld des Fahrers des Kraftfahrzeuges zur Anzeige gebracht wird. Derartige Kraftfahrzeugtürgriffeinheiten können auf beiden Seiten des Kraftfahrzeuges angeordnet sein, so dass sowohl der linke Außenspiegel als auch der rechte Außenspiegel eines Kraftfahrzeuges durch derartige Kraftfahrzeugtürgriffeinheiten in Verbindung mit einer oder mehrerer Bildwiedergabeeinrichtungen im Blickfeld des Kraftfahrzeugführers ersetzt werden können. Dabei ist der Blickwinkel gegenüber einer am Heck des Fahrzeugs angeordneten Rückfahrkamera deutlich vergrößert, da auch Bereiche entlang der Flanke des Fahrzeugs und/oder seitlich neben dem Fahrzeug optisch erfasst werden können.

Bei einer besonders bevorzugten Ausführungsform schließt die Handhabe in einer Schließstellung bündig mit einem Griffgehäuse und/oder einer Kraftfahrzeugtür ab und/oder liegt in einem Griffgehäuse und/oder einer Kraftfahrzeugtür ein und ist in zumindest eine erste Betriebsstellung verlagerbar, in der die Handhabe von dem Griffgehäuse und/oder der Kraftfahrzeugtür nach außen absteht und hintergreifbar ist, wobei bei einem manuellen Ziehen an der Handhabe in der ersten Betriebsstellung das Türschloss und/oder die Tür öffnet.

Dabei kann die Kamera in die Handhabe integriert sein und/oder derart angeordnet sein, dass die Kamera bei Verlagerung der Handhabe in die erste Betriebsstellung derart positioniert ist, dass mittels der Kamera ein Bereich in Blickrichtung nach hinten entlang an der Fahrzeugflanke des Kraftfahrzeuges erfasst werden kann.

Ferner kann die Handhabe in eine zweite Betriebsstellung verlagerbar sein, in welcher mittels der Kamera ein Bereich neben und/oder hinter dem Kraftfahrzeug erfassbar ist.

Die Kamera kann dementsprechend insbesondere in derartige Kraftfahrzeugtürgriffeinheiten integriert sein, bei denen die Handhabe in der Schließstellung bündig mit einem Griffgehäuse und/oder einer Kraftfahrzeugtür abschließt und/oder in einem Griffgehäuse und/oder einer Kraftfahrzeugtür einliegt.
Die Kamera kann dabei kinematisch mit der Handhabe gekoppelt sein. Alternativ kann die Kamera unabhängig von der Handhabe verfahrbar und positionierbar sein.

Das Griffgehäuse selbst kann durch ein Bauteil der Kraftfahrzeugtürgriffeinheit oder ein Karosserieteil des Kraftfahrzeuges gebildet sein.

Die Kamera ist erfindungsgemäß zwischen einer Ruheposition und mehreren Betriebspositionen verfahrbar, wobei die Kamera in einer Betriebsposition derart positioniert ist, dass die Kamera seitlich an dem Kraftfahrzeug entgegen der Fahrtrichtung nach hinten gerichtet ist. Mit dem Begriff der Fahrtrichtung ist dabei die übliche Blickrichtung eines Kraftfahrzeugführers nach vorne in Richtung auf die Front des Kraftfahrzeuges gemeint, dementsprechend ist die Kamera seitlich an dem Kraftfahrzeug nach hinten in Richtung auf das Heck des Kraftfahrzeuges gerichtet, so dass der Blickwinkel und die Blickrichtung der Kamera derart ausgestaltet ist, dass mittels der Kamera die Funktion eines Rückspiegels ersetzt werden kann.
In einer bevorzugten Ausführungsform ist die Kamera zwischen einer Ruheposition und mehreren Betriebspositionen verfahrbar, wobei die Betriebspositionen in Abhängigkeit der Fahrgeschwindigkeit des Kraftfahrzeuges festgelegt wird.
Hierdurch kann der Blickwinkel und/oder die Blickrichtung der Kamera der Fahrgeschwindigkeit des Kraftfahrzeuges angepasst werden beispielsweise in der Form, dass bei niedriger Fahrgeschwindigkeit ein größerer Blickwinkel mittels der Kamera optisch erfasst wird.

Alternativ oder kumulativ kann die Kamera eine variable Brennweite aufweisen, wobei die Festlegung der Brennweite in Abhängigkeit der Fahrtrichtung des Kraftfahrzeuges und/oder in Abhängigkeit der Fahrgeschwindigkeit des Kraftfahrzeuges erfolgt.

Hierdurch besteht die Möglichkeit durch eine Variation der Brennweite und einer Anpassung an die Fahrtrichtung und/oder die Fahrgeschwindigkeit des Kraftfahrzeuges eine Anpassung des Blickwinkels vorzunehmen, beispielsweise dahingehend, dass bei niedrigerer Fahrgeschwindigkeit ein größerer Blickwinkel erfasst wird, als bei einer erhöhten Fahrgeschwindigkeit des Kraftfahrzeuges. Auch ist eine Unterscheidung zwischen einer Vorwärts- und einer Rückwärtsfahrt möglich, da es für den Kraftfahrzeugführer beispielsweise bei einer Rückwärtsfahrt hilfreich ist, einen größeren Blickwinkel mittels der Kamera zu erfassen und auf einer Bildwiedergabeeinrichtung innerhalb des Kraftfahrzeuges zur Anzeige zu bringen. Besonders vorteilhaft ist dabei, dass der mittels der Kamera erfasste Bereich der Fahrsituation angepasst werden kann und zwischen langsamer Vorwärtsfahrt, schneller Vorwärtsfahrt und Rückwärtsfahrt unterschieden werden kann.

Bei einer bevorzugten Ausführungsform ist die Kamera zwischen einer Ruheposition und mehreren Betriebspositionen verfahrbar, wobei die Kamera bei Vorwärtsfahrt des Kraftfahrzeuges in eine erste Betriebsposition und bei Rückwärtsfahrt des Kraftfahrzeuges in eine davon abweichende zweite Betriebsposition verfahren wird.

Durch eine Variation der Betriebspositionen der Kamera und einer Unterscheidung zwischen Vorwärtsfahrt und Rückwärtsfahrt des Kraftfahrzeuges ist wiederum eine Anpassung der Blickrichtung und/oder des Blickwinkels der Kamera an die jeweilige Fahrsituation möglich.

Vorzugsweise ist das Ein- und Ausschalten der Kamera und/oder ein Verfahren der Kamera zwischen einer Ruheposition und einer oder mehrerer Betriebspositionen an eine Zündung des Kraftfahrzeuges gekoppelt und/oder erfolgt durch eine manuelle Betätigung. Insbesondere kann hierzu ein separater Schalter im Innenraum des Kraftfahrzeuges beispielsweise im Armaturenbrett und/oder in der Tür zum manuellen Betätigen und zum Einschalten der Kamera vorgesehen sein, um die mit der Kamera realisierte Rückspiegelfunktion in Betrieb zu nehmen.

Alternativ oder kumulativ ist das Ein- und Ausschalten der Kamera und/oder ein Verfahren der Kamera zwischen einer Ruheposition und einer oder mehrerer Betriebspositionen an eine Zündung des Kraftfahrzeuges gekoppelt, sodass die Inbetriebnahme der mit der Kamera realisierten Rückspiegelfunktion automatisch bei einem Anlassen des Kraftfahrzeuges erfolgt.

Vorzugsweise weist die Kraftfahrzeugtürgriffeinheit eine verfahrbare Abdeckung auf, insbesondere eine verfahrbare Abdeckung, mittels der die Kamera in einer Ruheposition der Kamera und/oder in einer Ruheposition der verfahrbaren Abdeckung abgedeckt ist.

Durch eine derartige Abdeckung wird ein zuverlässiger Schutz der Kamera gegen Verschmutzungen realisiert.

Ferner kann vorgesehen sein, dass eine Reinigungsvorrichtung zur Entfernung von Schmutz von dem Kameraobjektiv vorgesehen ist, wie beispielsweise dadurch, dass ein Kameraobjektiv der Kamera an einer Gummilippe und/oder an einer Bürste entlang geführt wird respektive umgekehrt, dass eine Gummilippe und/oder eine Bürste an einem während der Reinigung feststehenden Kameraobjektiv vorbeigeführt werden, um das Kameraobjektiv von Schmutz zu reinigen.

Vorzugsweise weist die Kraftfahrzeugtürgriffeinheit unbewegliche und/oder variable Strömungsführungselemente zur Verminderung von Windgeräuschen auf.

Derartige Strömungsführungselemente sind vorzugsweise bei solchen Ausführungsformen vorgesehen, bei denen die Kraftfahrzeugtürgriffeinheit eine in der Ruheposition versenkte insbesondere bündige Handhabe aufweist, die zur Verlagerung in eine Betriebsposition aus dem Griffgehäuse ausfährt und/oder ausgeklappt wird, wobei in dieser Betriebsposition ferner die Kamera zum Einsatz kommen kann. In diesem Fall steht die Handhabe gegenüber dem Griffgehäuse nach außen über, so dass zur Vermeidung von Windgeräuschen Strömungsführungselemente angeordnet werden können.

Vorzugsweise weist die Kraftfahrzeugtürgriffeinheit einen Schließzylinder für eine Notentriegelung auf. Insbesondere kann der Schließzylinder von der Handhabe in der Ruheposition abgedeckt sein. Hierzu kann eine Taste vorgesehen sein, mittels derer die Handhabe manuell aus ihrer Ruheposition heraus ausgelenkt werden kann, um den Schließzylinder für eine Notentriegelung zugänglich zu machen, beispielsweise in dem Fall, dass ein externer Identifikationsgeber zur Betätigung einer funkfernbedienten Kraftfahrzeugschließanlage ausgefallen ist und/oder bei Ausfall der elektrischen Versorgung der Kraftfahrzeugtürgriffeinheit, was dazu führt, dass diese trotz einer Betätigung mittels des externen Identifikationsgebers nicht entriegelt. In diesem Fall kann durch eine mechanische Betätigung eines Schließzylinders für eine Notentriegelung die Kraftfahrzeugtür dennoch geöffnet werden.

Ferner können die Kraftfahrzeugtürgriffeinheit und/oder die Handhabe Sensoren zur Erfassung der Annäherung eines Benutzers und/oder zur Erfassung einer bestimmten Bewegung eines Benutzers aufweisen. Durch derartige Sensoren kann die Annäherung eines Benutzers erkannt werden, um sodann eine automatische Identifikation eines externen Identifikationsgebers beispielsweise unter Anwendung einer RFID-Kommunikation auszulösen. Ferner kann beispielsweise eine bestimmte Geste, wie eine Wischbewegung des Benutzers entlang der Kraftfahrzeugtürgriffeinheit identifiziert werden, durch die beispielsweise ein Öffnen der Kraftfahrzeugtür ausgelöst wird.

Vorzugsweise weisen die Kraftfahrzeugtürgriffeinheit und/oder die Handhabe Beleuchtungsmittel auf. Durch derartige Beleuchtungsmittel können einerseits die Handhabe und/oder eine Griffmulde der Kraftfahrzeugtürgriffeinheit für den Benutzer ausgeleuchtet werden. Alternativ oder kumulativ kann eine Umfeldbeleuchtung erfolgen, wie beispielsweise ein Beleuchten des Bodens neben der Kraftfahrzeugtür mittels derartiger Beleuchtungsmittel.

In einer bevorzugten Ausführungsform weist die Kraftfahrzeugtürgriffeinheit eine Antenne für eine Nahfeldkommunikation und Mittel zum Aufbau einer Nahfeldkommunikationsverbindung auf. Ferner kann die Kraftfahrzeugtürgriffeinheit und/oder die Handhabe weitere Elektronikbauteile und/oder Elektronikmodule zur Verarbeitung von Funksignalen, Sensorsignalen und/oder zum Aufbau und Halten einer Nahfeldkommunikationsverbindung aufweisen, mittels derer beispielsweise ein Abgleich mit einem externen Identifikationsgeber durchgeführt werden kann.

Ferner können Mittel vorgesehen sein zur Beheizung und/oder Reinigung einer Kameraoptik der Kamera, um der Ablagerung von Schmutz und/oder einem Beschlagen der Kameraoptik vorzubeugen, so dass die Kamera stets zuverlässig eingesetzt werden kann und eine Rückspiegelfunktion durch die Kamera in Verbindung mit einer Bildwiedergabeeinrichtung im Blickfeld des Fahrzeugführers realisiert werden kann.

In einer bevorzugten Ausführungsform weist die Kraftfahrzeugtürgriffeinheit eine Reinigungsvorrichtung zur Entfernung von Schmutz von der Kamera auf, mittels derer die Kamera in einer Ruheposition und/oder in einer ersten Betriebsposition und/oder in einer zweiten Betriebposition reinigbar ist. Insbesondere kann mittels einer solchen Reinigungsvorrichtung die Kamera in einer ersten Betriebsposition und/oder in einer zweiten Betriebposition reinigbar sein. Dementsprechend kann eine solche Reinigungsvorrichtung sowohl bei einer stationären Kamera, als auch bei einer verfahrbaren Kamera angeordnet sein.

Vorzugsweise ist eine derartige Reinigungsvorrichtung zur Entfernung von Schmutz von der Kamera durch einen Abstreifer gebildet, an welchem die Kamera bei einem Verfahren der Kamera und/oder bei einem Verfahren des Abstreifers entlang gleitet. Es kann somit entweder die Kamera verfahren werden oder der Abstreifer verfahren werden oder es werden sowohl die Kamera als auch der Abstreifer relativ zueinander verfahren, wobei die Anordnung dergestalt erfolgt, dass die Kamera, insbesondere zumindest die Außenseite der Kameraoptik an dem Abstreifer entlang gleitet, sodass mittels des Abstreifers Schmutzpartikel von der Kamera entfernt werden.

Ein solcher Abstreifer kann insbesondere eine oder mehrere Gummilippen aufweisen, an welchen die äußere Kameralinse der Kamera entlang gleitet. Alternativ oder kumulativ zu einer oder mehreren Gummilippen können eine oder mehrere Bürsten angeordnet sein, an welchen die äußere Kameralinse der Kamera entlang gleitet, um Schmutzpartikel von der Kamera zu entfernen.

Alternativ oder kumulativ zu einem Abstreifer kann ferner eine eine Reinigungsvorrichtung zur Entfernung von Schmutz von der Kamera angeordnet sein, die durch eine Sprühvorrichtung gebildet ist, insbesondere aufweisend eine verfahrbare Sprühdüse, mittels derer die Kamera gereinigt werden kann.

Mittels einer solchen Sprüheinrichtung kann ähnlich einer bei Fahrzeugen bekannten Scheibenwaschanlage eine Reinigungsflüssigkeit wie beispielsweise Wasser oder Wasser mit einem Reinigungszusatz auf die Kamera, insbesondere die Kameraoptik gesprüht werden, um mittels der Reinigungsflüssigkeit Schmutzpartikel von der Kamera zu entfernen.

Insbesondere kann eine verfahrbare Sprühdüse angeordnet sein. Eine Sprühvorrichtung kann somit derart angeordnet sein, dass eine Reinigung der Kamera bei einer stationären Kamera ebenso erfolgen kann, wie bei einer verfahrbar angeordneten Kamera. Eine Reingung mittels einer solchen Sprühvorrichtung kann bei verfahrbarer Kamera in der Ruheposition und/oder in einer ersten Betriebsposition und/oder in einer zweiten Betriebsposition durchgeführt werden. Insbesondere ist es möglich, eine verfahrbare Sprühdüse anzuordnen, die beispielsweise nur zur Durchführung einer Reinigung der Kamera in eine Betriebsposition ausgefahren wird und ansonsten in einer Ruheposition eingefahren ist.

Die Reinigung der Kamera mittels einer Reinigungsvorrichtung kann turnusgemäß nach Ablauf einer bestimmten Zeitspanne automatisch durchgeführt werden und/oder mittels einer Auswerteelektronik automatisch ausgelöst werden, wenn beispielsweise mittels der Auswerteelektronik durch Auswertung der Kamerabilder eine Verschmutzung der Kamera detektiert wurde, und/oder manuell durch einen Benutzer des Kraftfahrzeuges auslösbar sein.

Mehrere Ausführungsbeispiele erfindungsgemäßer Kraftfahrzeugtürgriffeinheiten sind in den Figuren dargestellt und werden nachfolgend näher erläutert. Es zeigen:
- Fig. 1:: Eine Seitenansicht einer Kraftfahrzeugtürgriffeinheit in Ruheposition;
- Fig. 2:: eine Seitenansicht der Kraftfahrzeugtürgriffeinheit mit in eine erste Betriebsstellung verlagerter Handhabe;
- Fig. 3:: eine Seitenansicht der Kraftfahrzeugtürgriffeinheit mit in eine zweite Betriebsstellung verlagerter Handhabe;
- Fig. 4:: eine Seitenansicht der Kraftfahrzeugtürgriffeinheit mit in die zweite Betriebsstellung verlagerter Handhabe und in eine erste Betriebsposition verfahrener Kamera;
- Fig. 5:: eine Seitenansicht der Kraftfahrzeugtürgriffeinheit mit in die zweite Betriebsstellung verlagerter Handhabe und in eine zweite Betriebsposition verfahrener Kamera;
- Fig. 6:: eine perspektivische Ansicht der Kraftfahrzeugtürgriffeinheit mit in die zweite Betriebsstellung verlagerter Handhabe und in eine zweite Betriebsposition verfahrener Kamera gemäß Fig. 5;
- Fig. 7:: eine perspektivische Ansicht der Kraftfahrzeugtürgriffeinheit mit ausgeklappter Handhabe und zugänglichem Schließzylinder.
- Fig. 8:: eine Seitenansicht einer zweiten Ausführungsform einer Kraftfahrzeugtürgriffeinheit mit einer Sprühvorrichtung zur Reinigung der Kamera;
- Fig. 9:: eine Seitenansicht einer dritten Ausführungsform einer Kraftfahrzeugtürgriffeinheit mit einem Abstreifer zur Reinigung der Kamera.

In den Figuren sind identische Bauteile und Baugruppen mit identischen Bezugszeichen versehen.

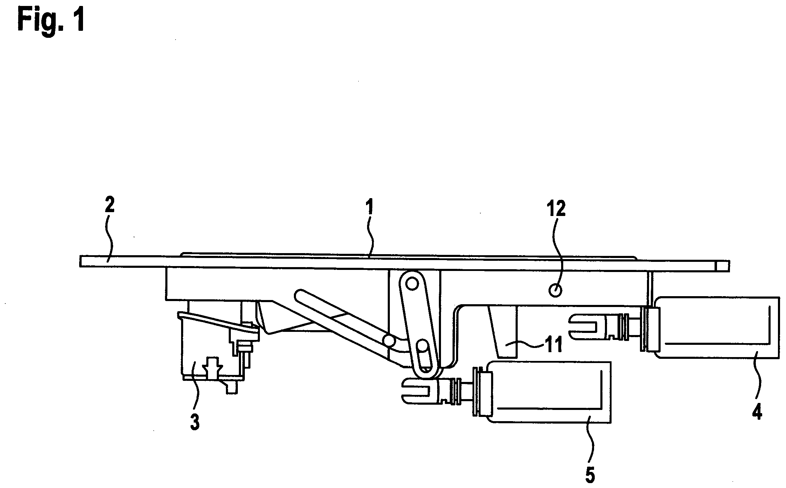

Figur 1 zeigt eine Seitenansicht einer Kraftfahrzeugtürgriffeinheit in Ruheposition, bei der die Handhabe 1 bündig in den Griffgehäuse 2 einliegt. Es handelt sich somit um einen flächenbündigen Türgriff, der in seiner Ruheposition bündig mit der Fahrzeugkarrosserie, das heißt mit der Tür, in welche die Kraftfahrzeugtürgriffeinheit eingebaut wird, abschließt.

In der Seitenansicht gemäß Fig. 1 sind weiterhin sichtbar der in das Griffgehäuse integrierte Schließzylinder 3, der in der Ruheposition der Handhabe 1 von der Handhabe 1 verdeckt wird. Dieser Schließzylinder 3 dient der Notentriegelung der Kraftfahrzeugtür bei einem Ausfall der elektrischen Systeme. Diese Funktionsweise wird später näher erläutert.

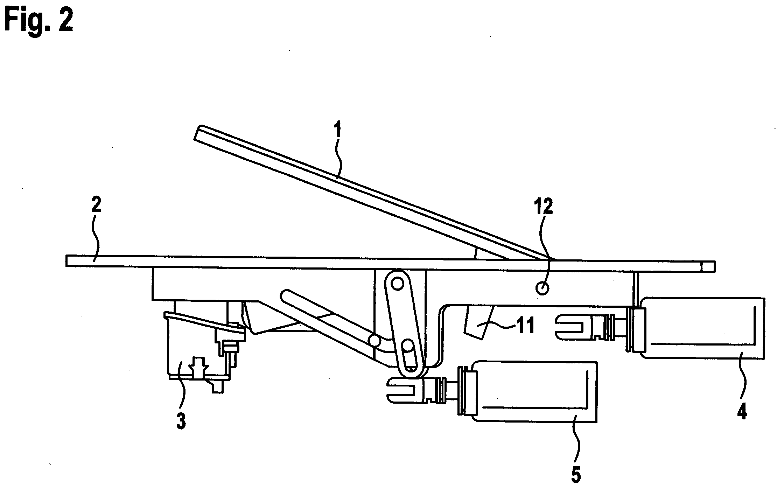

Ferner sind in der Seitenansicht gemäß Fig. 1 sichtbar zwei Stellmotoren 4, 5, mittels derer die beweglichen Teile der Kraftfahrzeugtürgriffeinheit verfahren und positioniert werden. Auf die Darstellung der kinematischen Kopplung der Stellmotoren 4, 5 mit den jeweils von diesen Stellmotoren betriebenen Bauteilen wurde in der Darstellung verzichtet. Die Wirkungsweise wird nachfolgend erläutert:
Der erste Stellmotor 4 wirkt translatorisch auf den Hebel 11, wodurch die Handhabe 1 aus der Schließstellung gemäß Fig.1 in eine erste Betriebsstellung gemäß Fig. 2 um die Drehachse 12 herum verlagert wird. In der ersten Betriebsstellung gemäß Fig. 2 ist die Handhabe 1 von einem Benutzer hintergreibar, wobei bei einer Betätigung der Handhabe 1 in der Betriebsstellung gemäß Fig. 2 durch einen Benutzer in dem Fall, dass das Kraftfahrzeugschließsystem entriegelt ist, die Kraftfahrzeugtür geöffnet werden kann.

Die Kraftfahrzeugtürgriffeinheit weist hierzu eine Antenne für eine Nahfeldkommunikation sowie Mittel zum Aufbau einer Nahfeldkommunikation auf, über die eine Verbindung zu einem externen Identifikationsgeber über eine Funkverbindung aufgebaut wird. Sofern der externe Identifikationsgeber die zu dem Kraftfahrzeugschließsystem des Kraftfahrzeuges gehörige Identifikation über Funk liefert, erfolgt automatisch eine Identifikation und eine Betätigung des Stellmotors 4, wodurch die Handhabe 1 von der Ruheposition gemäß Fig. 1 in die erste Betriebsstellung Gemäß Fig. 2 verlagert wird, so dass die Handhabe 1 durch den Benutzer ergreifbar ist und die Kraftfahrzeugtür geöffnet werden kann.

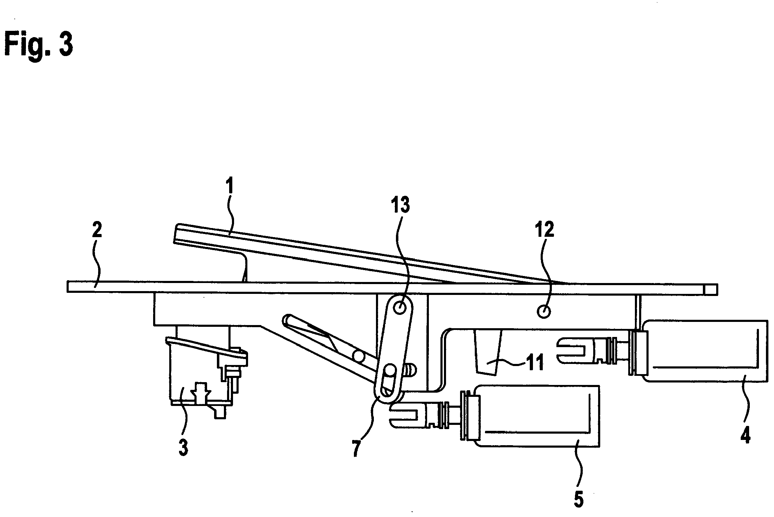

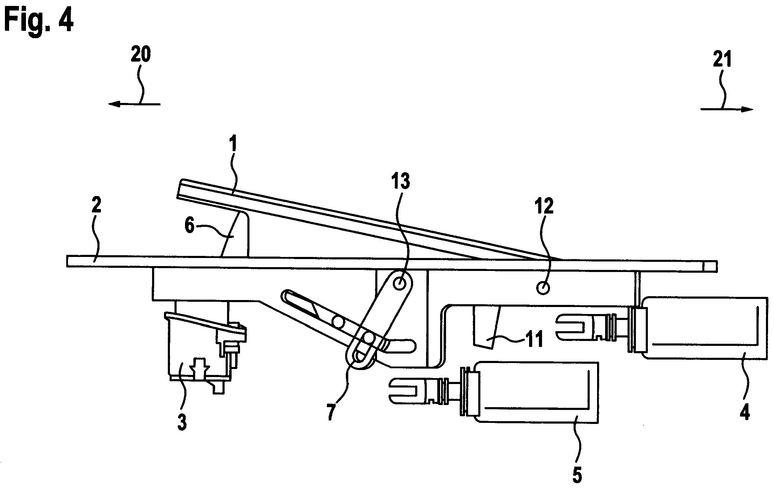

In die Kraftfahrzeugtürgriffeinheit ist eine Kamera 6 integriert, deren Funktionsweise nachfolgend erläutert wird. Um die Kamera 6 von der Ruheposition gemäß Fig. 1 in die Betriebsposition zu verfahren, greift der Stellmotor 5 an dem Betätigungshebel 7 an. Fig. 3 zeigt eine Zwischenposition und Fig. 4 zeigt die in eine erste Betriebsposition verfahrene Kamera 6, in welcher der Hebel 7 mittels des Stellmotors 5 um die Achse 13 soweit verschwenkt wurde, dass die Kamera 6 in eine erste Betriebsposition verfahren wurde. Dabei wird die Handhabe 1 automatisch in eine leicht ausgestellte Öffnungsposition verfahren, wie dies in Fig. 4 dargestellt ist. Die erste Betriebsposition gemäß Fig. 4 der Kamera 6 entspricht jener Betriebsposition der Kamera 6 bei Vorwärtsfahrt des Kraftfahrzeuges. In der Position gemäß Fig. 4 ist somit die Handhabe 1 soweit ausgeschwenkt und die Kamera 6 in ihre erste Betriebsposition verfahren, so dass ein Blickbereich in Richtung des Pfeiles 20 entlang an der Fahrzeugflanke, in welcher die Kraftfahrzeugtürgriffeinheit montiert ist, mittels der Kamera 6 optisch erfasst werden kann. In den Figuren 4 bezeichnet der Pfeil 21 die Richtung auf die Fahrzeugfront, das heißt die Fahrtrichtung bei Vorwärtsfahrt des Fahrzeuges und dementsprechend bezeichnet der Pfeil 20 die Blickrichtung nach hinten an der Fahrzeugflanke entlang auf das Heck des Fahrzeugs. Mittels der Kamera 6 ist somit in der ersten Betriebsstellung gemäß Fig. 4 ein Bereich optisch erfassbar, der einem Blickwinkel entspricht, der mittels eines Rückspiegels vom Fahrer aus einsehbar ist, sodass mittels der Kamera 6 in ihrer ersten Betriebsposition ein Rückspiegel für eine Vorwärtsfahrt ersetzt werden kann.

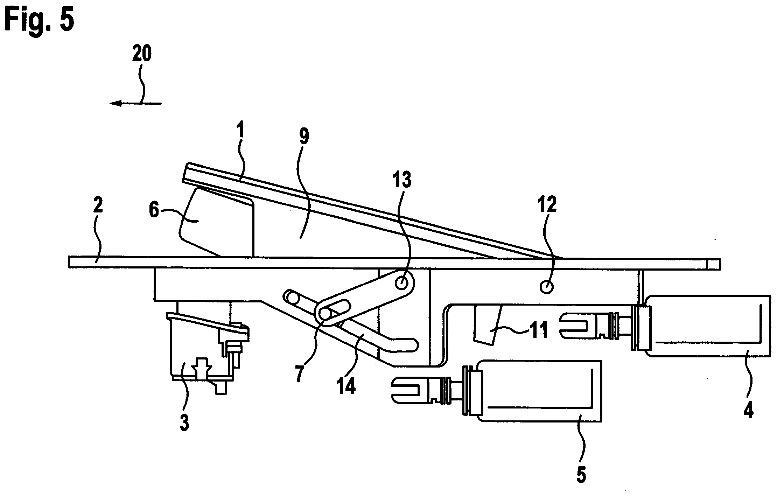

Die Kamera 6 ist in eine zweite Betriebsposition gemäß Fig. 5 verfahrbar. Hierzu wird mittels des Stellmotors 5 der Betätigungshebel 7 weiter verlagert, indem der Betätigungshebel um die Drehachse 13 weiter gedreht wird und die Kamera 6 entlang der Kulissenführung 14 von einer rotatorischen Bewegung um die Drehachse 13 herum in eine translatorische Bewegung entlang der Kulissenführung 14 übergeht.

In nicht dargestellten alternativen Ausführungsformen erfolgt die Verlagerung der Kamera von einer Ruheposition in eine oder mehrere Betriebspositionen lediglich rotatorisch und/oder translatorisch oder durch eine Abfolge rotatorischer und translatorischer Bewegungen. Eine derartige Kulissenführung kann beispielsweise auch S-förmig ausgestaltet sein, so dass gegenläufige rotatorische Bewegungen aufeinander folgen können.

Bei der in Fig. 5 dargestellten zweiten Betriebsposition ist die Kamera 6, die in einem Kameraschlitten 9 geführt wird, in die zweite Betriebsposition bei Rückwärtsfahrt des Kraftfahrzeuges verfahren. Das Verfahren der Kamera 6 in diese zweite Betriebsposition erfolgt automatisch bei Einlegen des Rückwärtsganges in dem Kraftfahrzeug. Wie erläutert wird hierzu über die Betätigung des Hebels 7 mittels des Stellmotors 5 und dem Verfahren entlang der Kulissenführung 14 die Kamera 6 innerhalb des Kameraschlittens 9 in die in Fig. 5 dargestellte zweite Betriebsposition verfahren, wodurch es ermöglicht ist, mittels der Kamera 6 einen breiteren Blickwinkel zu erfassen, da dies bei Rückwärtsfahrt in Richtung des Pfeiles 20 des Kraftfahrzeuges für den Kraftfahrzeugführer besonders hilfreich ist. Um einen größeren Blickwinkel zu erfassen ist die Brennweite der Kamera 6 variabel und wird der jeweiligen Anforderung entsprechend angepasst.

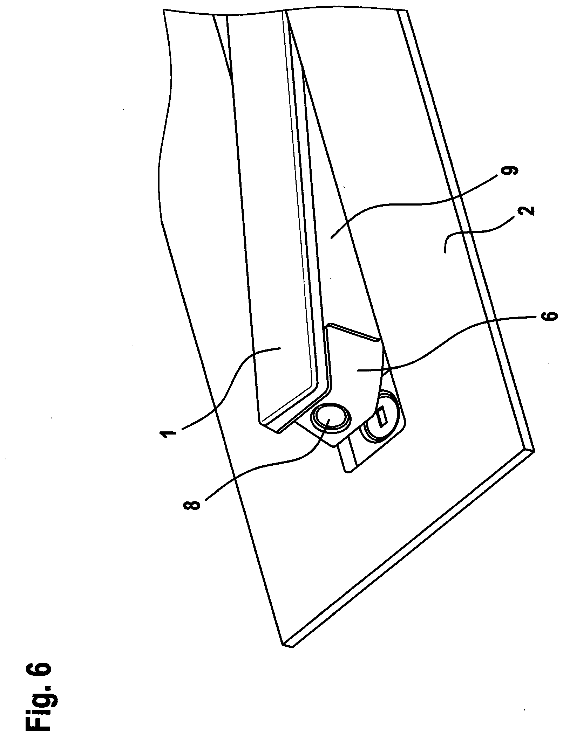

Die in Fig. 5 dargestellte zweite Betriebsposition der Kamera 6 ist in Fig. 6 in einer perspektivischen Ansicht dargestellt. Sichtbar in der Darstellung gemäß Fig. 6 ist das Kameraobjektiv 8 der Kamera 6 sowie der Schlitten 9, innerhalb dessen die Kamera 6 translatorisch zwischen der ersten Betriebsposition der Kamera 6 gemäß Fig. 4 und der zweiten Betriebsposition der Kamera 6 gemäß Fig. 5 verfahrbar ist.

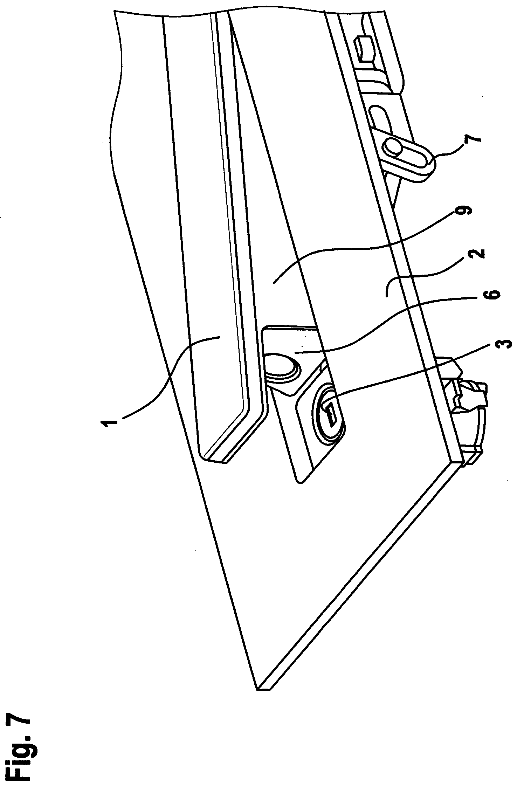

In Fig. 7 ist eine perspektivische Ansicht der Kraftfahrzeugtürgriffeinheit mit teilweise gegenüber den Kraftfahrzeuggriffgehäuse 2 ausgeklappter Handhabe 1 dargestellt. In dieser Position gemäß Fig. 7 ist der Schließzylinder 3 von außen zugänglich, um eine Notentriegelung der Kraftfahrzeugtür zu ermöglichen, in dem Fall, dass die elektrischen Systeme ausgefallen sein sollten, oder aber der externe Identifikationsgeber beispielsweise in Folge eines Defektes keine entsprechende Identifikation senden kann. Für diesen Fall ist eine manuelle Betätigung der Handhabe 1 vorgesehen, wobei durch Betätigung eines entsprechenden Druckknopfes die Handhabe 1 in die Öffnungsposition gemäß Fig. 7 verlagert werden kann, wodurch der Schließzylinder 3 für den Benutzer zugänglich wird und eine Notentriegelung der Kraftfahrzeugtür durch Betätigung des Schließzylinders 3 mittels eines Notschlüssels ermöglicht wird.

Zur automatischen Reinigung des Kameraobjektivs 8 der Kamera 6 sind innerhalb des Griffgehäuses 2 Bürsten angeordnet, an welchen das Kameraobjektiv 8 beim Verfahren zwischen der Ruheposition gemäß Fig. 1 und der Betriebsposition der Kamera 6 vorbeifährt und hierdurch automatisch von Verschmutzungen gereinigt wird.

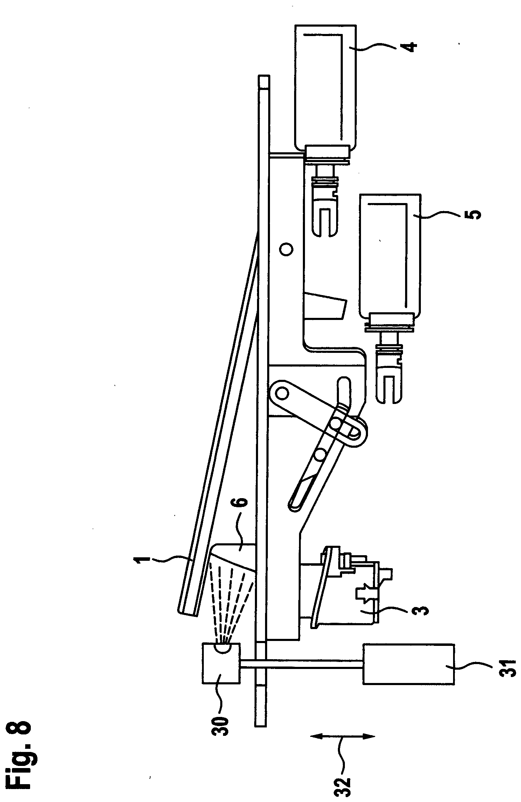

Fig. 8 zeigt eine Seitenansicht einer zweiten Ausführungsform einer Kraftfahrzeugtürgriffeinheit mit einer Reinigungsvorrichtung in Form einer Sprühdüse 30, mittels derer Waschwasser auf die Kamera 6 gesprüht werden kann, um die Kameraoptik der Kamera 6 von Schmutzpartikeln zu reinigen. Im Übrigen sind in der Darstellung gemäß Fig. 8 mit der vorherigen Ausführungsform einer Kraftfahrzeugtürgriffeinheit identische Bauteile wiederum mit identischen Bezugzeichen versehen.

Zur Reinigung der Kamera 6 ist die Waschwassersprühvorrichtung mit der Sprühdüse 30 vorgesehen, mittels derer Waschwasser auf die Kamera 6 gesprüht werden kann, um die Kamera 6 von Schmutzpartikeln zu reinigen. Ferner ist angeordnet ein Stellmotor 31, mittels dessen die Sprühdüse 30 vertikal wie durch den Doppelpfeil 32 angedeutet verfahren werden kann.

In der Ruheposition ist die Sprühdüse 30 in das Gehäuse der Kraftfahrzeugtürgriffeinheit eingefahren. Zur Betätigung der Reinigungsvorrichtung wird die Sprühdüse 30 mittels des Stellmotors 31 in die in Fig. 8 dargestellte Betriebsposition ausgefahren und sodann Waschwasser durch die Sprühdüse 30 auf die Kamera 6 aufgebracht.

Die Reinigung der Kamera 6 mittels der Sprühdüse 30 kann manuell durch den Kraftfahrzeugführer ausgelöst werden, wenn dieser auf seiner Bildwiedergabeeinheit im Kraftfahrzeug feststellt, dass die Bildqualität nachlässt und dieses offensichtlich auf einer Verschmutzung der Kamera 6 beruht.

Ferner kann vorgesehen sein, dass durch eine elektronische Bildauswertung etwaige Verschmutzungen der Kamera 6 automatisch detektiert werden, wodurch eine automatische Betätigung der Sprühvorrichtung ausgelöst wird, das heißt, dass das Ausfahren der Düse 30 mittels des Stellmotors 31 und sodann die Betätigung der Sprühvorrichtung zur Reinigung der Kamera 6 automatisch ausgelöst wird.

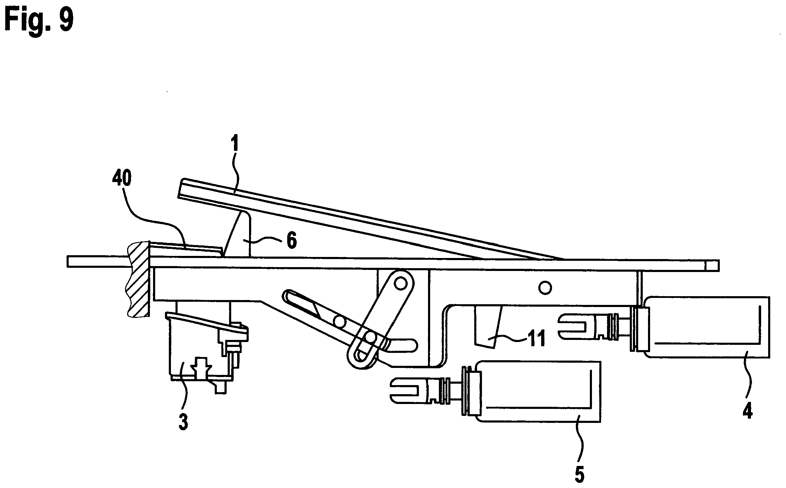

In Fig. 9 ist dargestellt eine Seitenansicht einer dritten Ausführungsform einer Kraftfahrzeugtürgriffeinheit mit einem Abstreifer 40 zur Reinigung der Kamera 6. Im Übrigen sind auch bei diesem Ausführungsbeispiel gemäß Fig. 9 wiederum mit den vorherigen Ausführungsformen übereinstimmende Bauteile mit identischen Bezugszeichen versehen.

Vor der Kamera 6 ist ortsfest ein Abstreifer 40 angeordnet, der derart positioniert ist, dass die Kamera 6 beim Ausfahren in die in Fig. 9 dargestellte Betriebsposition an dem Abstreifer 40 entlang gleitet und hierdurch die äußere Linse der Kamera 6 automatisch von Schmutzpartikeln gereinigt wird.

Der Abstreifer 40 weist hierzu mehrere Gummilippen auf, die an der äußeren Linse der Kamera 6 anliegen, so dass mittels der Gummilippen Schmutzpartikel automatisch von der äußeren Kameralinse der Kamera 6 entfernt werden, wenn die Kamera 6 während des Verfahrens aus der Ruheposition heraus in ihre in Fig. 9 dargestellte Betriebsposition an dem Abstreifer entlang gleitet und hierdurch gereinigt wird. Umgekehrt gleitet die Kamera 6 ebenfalls während des Verfahrens zurück in die Ruheposition innerhalb des Gehäuses Betriebsposition an dem Abstreifer entlang wird hierdurch gereinigt.

### Bezugszeichen

- 1: Handhabe
- 2: Griffgehäuse
- 3: Schließzylinder
- 4: Stellmotor
- 5: Stellmotor
- 6: Kamera
- 7: Betätigungshebel
- 8: Kameraobjektiv
- 9: Kameraschlitten
- 11: Hebel
- 12: Drehachse
- 13: Drehachse
- 14: Kulissenführung
- 20: Fahrtrichtung bei Vorwärtsfahrt
- 21: Fahrtrichtung bei Rückwärtsfahrt
- 30: Sprühdüse
- 31: Stellmotor
- 32: Verfahrweg der Sprühdüse
- 40: Abstreifer

## Patentansprüche

1. Kraftfahrzeugtürgriffeinheit mit einer Handhabe (1) zur Türschloss- und/oder Türbetätigung eines Kraftfahrzeuges, wobei die Kraftfahrzeugtürgriffeinheit zumindest eine Kamera (6) aufweist, **dadurch gekennzeichnet, dass** mittels der Kamera (6) ein Bereich neben und/oder hinter dem Fahrzeug optisch erfasst werden kann, wobei die Kamera (6) derart verfahrbar und positionierbar ist, dass die Kamera (6) seitlich an dem Kraftfahrzeug nach hinten gerichtet ist, wobei die Kamera (6) zwischen einer Ruheposition und mehreren Betriebspositionen verfahrbar ist.

2. Kraftfahrzeugtürgriffeinheit nach Anspruch 1, **dadurch gekennzeichnet, dass** die Kamera (6) in der Handhabe (1) angeordnet und/oder mit der Handhabe (1) gekoppelt ist.

3. Kraftfahrzeugtürgriffeinheit nach Anspruch 1 oder 2, **dadurch gekennzeichnet, dass** die Kamera (6) in einem Zylinderturm der Kraftfahrzeugtürgriffeinheit angeordnet ist.

4. Kraftfahrzeugtürgriffeinheit nach einem der vorherigen Ansprüche, **dadurch gekennzeichnet, dass** die Handhabe (1) in einer Schließstellung bündig mit einem Griffgehäuse (2) und/oder einer Kraftfahrzeugtür abschließt und/oder in einem Griffgehäuse (2) und/oder einer Kraftfahrzeugtür einliegt und in zumindest eine erste Betriebsstellung verlagerbar ist, in der die Handhabe (1) von einem Griffgehäuse (2) und/oder einer Kraftfahrzeugtür nach außen absteht und hintergreifbar ist, wobei bei einem manuellen Ziehen an der Handhabe (1) in der ersten Betriebsstellung das Türschloss und/oder die Tür öffnet.

5. Kraftfahrzeugtürgriffeinheit nach Anspruch 4, **dadurch gekennzeichnet, dass** die Handhabe (1) in eine zweite Betriebsstellung verlagerbar ist, in welcher mittels der Kamera (6) ein Bereich neben und/oder hinter dem Kraftfahrzeug erfassbar ist.

6. Kraftfahrzeugtürgriffeinheit nach einem der vorherigen Ansprüche, **dadurch gekennzeichnet, dass** die Kamera (6) zwischen der Ruheposition und zumindest einer Betriebsposition verfahrbar ist, wobei die Kamera (6) in der Betriebsposition derart positioniert ist, dass die Kamera (6) seitlich an dem Kraftfahrzeug gegen die Fahrtrichtung nach hinten gerichtet ist.

7. Kraftfahrzeugtürgriffeinheit nach einem der vorherigen Ansprüche, **dadurch gekennzeichnet, dass** die Kamera (6) zwischen der Ruheposition und mehreren Betriebspositionen verfahrbar ist, wobei die Betriebsposition in Abhängigkeit der Fahrgeschwindigkeit des Kraftfahrzeuges festgelegt wird.

8. Kraftfahrzeugtürgriffeinheit nach einem der vorherigen Ansprüche, **dadurch gekennzeichnet, dass** die Kamera (6) eine variable Brennweite aufweist, wobei die Festlegung der Brennweite in Abhängigkeit der Fahrtrichtung des Kraftfahrzeuges und/oder in Abhängigkeit der Fahrgeschwindigkeit des Kraftfahrzeuges erfolgt.

9. Kraftfahrzeugtürgriffeinheit nach einem der vorherigen Ansprüche, **dadurch gekennzeichnet, dass** die Kamera (6) zwischen der Ruheposition und mehreren Betriebspositionen verfahrbar ist, wobei die Kamera (6) bei Vorwärtsfahrt des Kraftfahrzeuges in eine erste Betriebsposition und bei Rückwärtsfahrt des Kraftfahrzeuges in eine davon abweichende zweite Betriebsposition verfahren wird.

10. Kraftfahrzeugtürgriffeinheit nach einem der vorherigen Ansprüche, **dadurch gekennzeichnet, dass** ein Ein- und Ausschalten der Kamera (6) und/oder ein Verfahren der Kamera (6) zwischen der Ruheposition und einer oder mehrerer Betriebspositionen an eine Zündung des Kraftfahrzeuges gekoppelt ist und/oder durch eine manuelle Betätigung erfolgt.

11. Kraftfahrzeugtürgriffeinheit nach einem der vorherigen Ansprüche, **dadurch gekennzeichnet, dass** die Kraftfahrzeugtürgriffeinheit eine insbesondere verfahrbare Abdeckung aufweist, mittels welcher die Kamera (6) in der Ruheposition der Kamera (6) und/oder in einer Ruheposition der Abdeckung abgedeckt ist.

12. Kraftfahrzeugtürgriffeinheit nach einem der vorherigen Ansprüche, **dadurch gekennzeichnet, dass** die Kraftfahrzeugtürgriffeinheit unbewegliche und/oder variable Strömungsführungselemente zur Verminderung von Windgeräuschen aufweist.

13. Kraftfahrzeugtürgriffeinheit nach einem der vorherigen Ansprüche, **dadurch gekennzeichnet, dass** die Kraftfahrzeugtürgriffeinheit einen Schließzylinder (3) für eine Notentriegelung aufweist, insbesondere dass der Schließzylinder (3) von der Handhabe (1) in der Ruheposition abgedeckt wird.

14. Kraftfahrzeugtürgriffeinheit nach einem der vorherigen Ansprüche, **dadurch gekennzeichnet, dass** die Kraftfahrzeugtürgriffeinheit und/oder die Handhabe (1) Sensoren zur Erfassung der Annäherung eines Benutzers und/oder zur Erfassung einer bestimmten Bewegung eines Benutzers aufweist.

15. Kraftfahrzeugtürgriffeinheit nach einem der vorherigen Ansprüche, **dadurch gekennzeichnet, dass** die Kraftfahrzeugtürgriffeinheit und/oder die Handhabe (1) Beleuchtungsmittel aufweist.

16. Kraftfahrzeugtürgriffeinheit nach einem der vorherigen Ansprüche, **dadurch gekennzeichnet, dass** die Kraftfahrzeugtürgriffeinheit eine Antenne für eine Nahfeldkommunikation und Mittel zum Aufbau einer Nahfeldkommunikationsverbindung aufweist.

17. Kraftfahrzeugtürgriffeinheit nach einem der vorherigen Ansprüche, **dadurch gekennzeichnet, dass** sie eine Reinigungsvorrichtung (30, 40) zur Entfernung von Schmutz von der Kamera (6) aufweist, insbesondere mittels derer die Kamera (6) in einer ersten Betriebsposition und/oder in einer zweiten Betriebposition reinigbar ist.

18. Kraftfahrzeugtürgriffeinheit nach einem der vorherigen Ansprüche, **dadurch gekennzeichnet, dass** sie eine Reinigungsvorrichtung zur Entfernung von Schmutz von der Kamera (6) aufweist, die durch einen Abstreifer (40) gebildet ist, an welchem die Kamera (6) bei einem Verfahren der Kamera (6) und/oder bei einem Verfahren des Abstreifers (40) entlang gleitet.

19. Kraftfahrzeugtürgriffeinheit nach einem der vorherigen Ansprüche, **dadurch gekennzeichnet, dass** sie eine Reinigungsvorrichtung zur Entfernung von Schmutz von der Kamera (6) aufweist, die durch eine Sprühvorrichtung (30) gebildet ist, insbesondere aufweisend eine verfahrbare Sprühdüse, mittels derer die Kamera (6) gereinigt werden kann.

## Claims

1. Motor vehicle door handle unit with a handle (1) for activating the door lock and/or door of a motor vehicle, wherein the motor vehicle door handle unit has at least one camera (6), **characterised in that** by means of the camera (6) an area next to and/or behind the vehicle can be optically detected, wherein the camera (6) can be moved and positioned such that the camera (6) is directed to the rear on the side of the vehicle, wherein the camera (6) can be moved between a position of rest and a plurality of operating positions.

2. Motor vehicle door handle unit according to claim 1, **characterised in that** the camera (6) is arranged in the handle (1) and/or is coupled to the handle (1).

3. Motor vehicle door handle unit according to claim 1 or 2, **characterised in that** the camera (6) is arranged in a cylinder barrel of the motor vehicle door handle unit.

4. Motor vehicle door handle unit according to any of the preceding claims, **characterised in that** the handle (1) in a closed position closes flush with a handle housing (2) and/or a vehicle door and/or is inset in a handle housing (2) and/or a vehicle door and can be moved into at least one first operating position, in which the handle (1) protrudes outwardly from a handle housing (2) and/or a vehicle door and it is possible to grip behind the latter, wherein the door lock and/or the door opens by manually pulling on the handle (1) in the first operating position.

5. Motor vehicle door handle unit according to claim 4, **characterised in that** the handle (1) can be moved into a second operating position in which by means of the camera (6) an area can be detected next to and/or behind the vehicle.

6. Motor vehicle door handle unit according to any of the preceding claims, **characterised in that** the camera (6) can be moved between a position of rest and at least one operating position, wherein the camera (6) is positioned in the operating position such that the camera (6) is directed to the rear on the side of the vehicle opposite the travelling direction.

7. Motor vehicle door handle unit according to any of the preceding claims, **characterised in that** the camera (6) can be moved between the position of rest and a plurality of operating positions, wherein the operating position is determined as a function of the driving speed of the vehicle.

8. Motor vehicle door handle unit according to any of the preceding claims, **characterised in that** the camera (6) has a variable focal length, wherein the focal length is set as a function of the travelling direction of the vehicle and/or as a function of the travelling speed of the vehicle.

9. Motor vehicle door handle unit according to any of the preceding claims, **characterised in that** the camera (6) can be moved between the position of rest and a plurality of operating positions, wherein the camera (6) during the forwards drive of the vehicle is moved in a first operating position and during the reverse movement of the vehicle is moved into a different second operating position.

10. Motor vehicle door handle unit according to any of the preceding claims, **characterised in that** the camera (6) is switched on and off and/or a movement of the camera (6) between the position of rest and one or more operating positions is coupled with an ignition of the vehicle and/or is performed by manual activation.

11. Motor vehicle door handle unit according to any of the preceding claims, **characterised in that** the motor vehicle door handle unit has in particular a movable cover, by means of which the camera (6) is covered in a position of rest of the camera (6) and/or in a position of rest of the cover.

12. Motor vehicle door handle unit according to any of the preceding claims, **characterised in that** the motor vehicle door handle unit has unmovable and/or variable flow guiding elements for preventing wind noise.

13. Motor vehicle door handle unit according to any of the preceding claims, **characterised in that** the motor vehicle door handle unit has a locking cylinder (3) for emergency unlocking, in particular **in that** the locking cylinder (3) is covered by the handle (1) in the position of rest.

14. Motor vehicle door handle unit according to any of the preceding claims, **characterised in that** the motor vehicle door handle unit and/or the handle (1) has sensors for detecting the approach of a user and/or for detecting a specific movement of a user.

15. Motor vehicle door handle unit according to any of the preceding claims, **characterised in that** the motor vehicle door handle unit and/or the handle (1) has lighting means.

16. Motor vehicle door handle unit according to any of the preceding claims, **characterised in that** the motor vehicle door handle unit has an antenna for near field communication and means for establishing a near field communication connection.

17. Motor vehicle door handle unit according to any of the preceding claims, **characterised in that** it has a cleaning device (30, 40) for removing dirt from the camera (6), in particular by means of which the camera (6) can be cleaned in a first operating position and/or in a second operating position.

18. Motor vehicle door handle unit according to any of the preceding claims, **characterised in that** it has a cleaning device for removing dirt from the camera (6) which is formed by a wiper (40), along which the camera (6) slides when moving the camera (6) and/or when moving the wiper (40).

19. Motor vehicle door handle unit according to any of the preceding claims, **characterised in that** it has a cleaning device for removing dirt from the camera (6), which is formed by a spraying device (30), in particular comprising a movable spraying nozzle, by means of which the camera (6) can be cleaned.

## Revendications

1. Unité de poignée de porte de véhicule automobile avec une poignée (1) pour l'actionnement de la serrure de porte et/ou de la porte d'un véhicule automobile, dans laquelle l'unité de poignée de porte de véhicule automobile présente au moins une caméra (6), **caractérisée en ce qu'**une zone à côté et/ou derrière le véhicule peut être détectée optiquement au moyen de la caméra (6), dans laquelle la caméra (6) peut être déplacée et positionnée de telle sorte que la caméra (6) est dirigée vers l'arrière sur le côté du véhicule automobile, dans laquelle la caméra (6) est déplaçable entre une position de repos et plusieurs positions de fonctionnement.

2. Unité de poignée de porte de véhicule automobile selon la revendication 1, **caractérisée en ce que** la caméra (6) est agencée dans la poignée (1) et/ou est couplée à la poignée (1).

3. Unité de poignée de porte de véhicule automobile selon la revendication 1 ou 2, **caractérisée en ce que** la caméra (6) est agencée dans une tour de cylindre de l'unité de poignée de porte de véhicule automobile.

4. Unité de poignée de porte de véhicule automobile selon l'une quelconque des revendications précédentes, **caractérisée en ce que** la poignée (1) se termine dans une position de fermeture à fleur avec un boîtier de préhension (2) et/ou une porte de véhicule automobile et/ou est logée dans un boîtier de préhension (2) et/ou une porte de véhicule automobile et peut être déplacée dans au moins une première position de fonctionnement, dans laquelle la poignée (1) s'étend vers l'extérieur à partir d'un boîtier de préhension (2) et/ou d'une porte de véhicule automobile et peut venir en prise par derrière, dans laquelle la serrure de porte et/ou la porte s'ouvre lorsque la poignée (1) est tirée manuellement dans la première position de fonctionnement.

5. Unité de poignée de porte de véhicule automobile selon la revendication 4, **caractérisée en ce que** la poignée (1) peut être déplacée dans une deuxième position de fonctionnement, dans laquelle une zone à côté et/ou derrière le véhicule automobile peut être détectée au moyen de la caméra (6).

6. Unité de poignée de porte de véhicule automobile selon l'une quelconque des revendications précédentes, **caractérisée en ce que** la caméra (6) peut être déplacée entre la position de repos et au moins une position de fonctionnement, dans laquelle la caméra (6) est positionnée dans la position de fonctionnement de telle sorte que la caméra (6) est dirigée vers l'arrière sur le côté du véhicule automobile à l'opposé de la direction de déplacement.

7. Unité de poignée de porte de véhicule automobile selon l'une quelconque des revendications précédentes, **caractérisée en ce que** la caméra (6) peut être déplacée entre la position de repos et plusieurs positions de fonctionnement, dans laquelle la position de fonctionnement est fixée en fonction de la vitesse de déplacement du véhicule automobile.

8. Unité de poignée de porte de véhicule automobile selon l'une quelconque des revendications précédentes, **caractérisée en ce que** la caméra (6) présente une distance focale variable, dans laquelle la fixation de la distance focale a lieu en fonction de la direction de déplacement du véhicule automobile et/ou en fonction de la vitesse de déplacement du véhicule automobile.

9. Unité de poignée de porte de véhicule automobile selon l'une quelconque des revendications précédentes, **caractérisée en ce que** la caméra (6) peut être déplacée entre la position de repos et plusieurs positions de fonctionnement, dans laquelle la caméra (6) est déplacée en cas de marche avant du véhicule automobile dans une première position de fonctionnement et en cas de marche arrière du véhicule automobile dans une deuxième position de fonctionnement divergente de celle-ci.

10. Unité de poignée de porte de véhicule automobile selon l'une quelconque des revendications précédentes, **caractérisée en ce qu'**une mise en marche et arrêt de la caméra (6) et/ou un déplacement de la caméra (6) entre la position de repos et une ou plusieurs positions de fonctionnement est couplée à un allumage du véhicule automobile et/ou a lieu par un actionnement manuel.

11. Unité de poignée de porte de véhicule automobile selon l'une quelconque des revendications précédentes, **caractérisée en ce que** l'unité de poignée de porte de véhicule automobile présente un recouvrement en particulier déplaçable, au moyen duquel la caméra (6) est recouverte dans la position de repos de la caméra (6) et/ou dans une position de repos du recouvrement.

12. Unité de poignée de porte de véhicule automobile selon l'une quelconque des revendications précédentes, **caractérisée en ce que** l'unité de poignée de porte de véhicule automobile présente des éléments de guidage d'écoulement immobiles et/ou variables pour la réduction de bruits de vent.

13. Unité de poignée de porte de véhicule automobile selon l'une quelconque des revendications précédentes, **caractérisée en ce que** l'unité de poignée de porte de véhicule automobile présente un cylindre de fermeture (3) pour un déverrouillage d'urgence, en particulier que le cylindre de fermeture (3) de la poignée (1) est recouvert dans la position de repos.

14. Unité de poignée de porte de véhicule automobile selon l'une quelconque des revendications précédentes, **caractérisée en ce que** l'unité de poignée de porte de véhicule automobile et/ou la poignée (1) présente des capteurs de détection de l'approche d'un utilisateur et/ou de détection d'un mouvement déterminé d'un utilisateur.

15. Unité de poignée de porte de véhicule automobile selon l'une quelconque des revendications précédentes, **caractérisée en ce que** l'unité de poignée de porte de véhicule automobile et/ou la poignée (1) présente des moyens d'éclairage.

16. Unité de poignée de porte de véhicule automobile selon l'une quelconque des revendications précédentes, **caractérisée en ce que** l'unité de poignée de porte de véhicule automobile présente une antenne pour une communication en champ proche et des moyens d'établissement d'une liaison de communication en champ proche.

17. Unité de poignée de porte de véhicule automobile selon l'une quelconque des revendications précédentes, **caractérisée en ce qu'**elle présente un dispositif de nettoyage (30, 40) pour l'élimination de saleté de la caméra (6), en particulier au moyen duquel la caméra (6) peut être nettoyée dans une première position de fonctionnement et/ou dans une deuxième position de fonctionnement.

18. Unité de poignée de porte de véhicule automobile selon l'une quelconque des revendications précédentes, **caractérisée en ce qu'**elle présente un dispositif de nettoyage pour l'élimination de saleté de la caméra (6), qui est formé par un racloir (40), le long duquel la caméra (6) glisse lors d'un déplacement de la caméra (6) et/ou lors d'un déplacement du racloir (40).

19. Unité de poignée de porte de véhicule automobile selon l'une quelconque des revendications précédentes, **caractérisée en ce qu'**elle présente un dispositif de nettoyage pour l'élimination de saleté de la caméra (6), qui est formé par un dispositif de pulvérisation (30), en particulier présentant une buse de pulvérisation déplaçable, au moyen de laquelle la caméra (6) peut être nettoyée.
